Europäisches Patentamt

European Patent Office

Office européen des brevets

(11) Publication number: **0 101 868**
**B1**

# EUROPEAN PATENT SPECIFICATION

(45) Date of publication of patent specification: **03.12.86**

(51) Int. Cl.⁴: **F 16 D 65/56**

(21) Application number: **83106960.4**

(22) Date of filing: **15.07.83**

(54) **Automatic brake adjusting mechanism.**

(30) Priority: **28.07.82 US 402499**

(43) Date of publication of application:
**07.03.84 Bulletin 84/10**

(45) Publication of the grant of the patent:
**03.12.86 Bulletin 86/49**

(84) Designated Contracting States:
**BE CH DE FR GB IT LI NL SE**

(56) References cited:
**EP-A-0 050 945**
**FR-A-1 373 335**
**FR-A-2 454 559**
**GB-A-1 567 345**
**US-A-3 037 584**
**US-A-3 068 964**
**US-A-3 570 632**
**US-A-3 599 762**
**US-A-3 797 613**
**US-A-3 822 003**

(73) Proprietor: **Rockwell International Corporation**
**600 Grant Street**
**Pittsburgh Pennsylvania 15219 (US)**

(72) Inventor: **Crewson, Gary Edward**
**6895 Oakhill Road**
**Clarkston Michigan 48016 (US)**

(74) Representative: **Leiser, Gottfried, Dipl.-Ing. et al**
**Patentanwälte Prinz, Leiser, Bunke & Partner**
**Manzingerweg 7**
**D-8000 München 60 (DE)**

Courier Press, Leamington Spa, England.

## Description

### Background of the Invention

The present invention relates to automotive vehicle brakes and more specifically, to an automatic brake adjusting mechanism for a wedge actuated brake for heavy duty service on trucks and coaches.

In wedge actuated brakes the brake shoes are moved outwardly into engagement with the friction surface of a surrounding brake drum by forcing a wedge between the adjacent ends of a pair of axially aligned plungers disposed between the ends of a pair of brake shoes. The wedge is mounted in such a manner as to permit it to float slightly with its position between the plungers being partly determined by reaction forces exerted on the wedge by the plungers. Examples of such brake mechanisms are illustrated in United States Patent 3,037,584 issued June 5, 1962, to F. T. Cox et al and United States Patent 3,599,762 issued August 17, 1971, to F. T. Cox et al. Such brake mechanisms are manufactured in sizes ranging from 15″ (393, 7 mm) to 42″ (1079, 50 mm) in diameter with the larger sizes used primarily for off-highway vehicles.

These brakes are subject to tremendous loads due to the size of the vehicles and the loads they carry. This results in relatively rapid wear of the brake shoe linings which may be further compounded by frequent stopping, particularly on other than level terrain as encountered in off-highway and intra-city service. It is therefore customary to equip such brakes with a mechanism that will automatically adjust the brake actuator to accommodate for brake lining wear and to maintain the travel of the actuator plungers and their associated brake shoes relatively constant throughout the normal life of the brake shoe linings. An example of one such automatic adjusting mechanism is described in United States Patent 3,068,964 issued December 18, 1962, to W. J. Williams et al. In such adjusting mechanisms, one of the plunger is comprised of an assembly of parts in which the length of the plunger assembly is automatically increased or extended to compensate for a reduction in the brake shoe lining thickness as the friction lining wears during normal service.

Improvements to that type of automatic adjusting mechanism are disclosed in United States Patent 3,570,632 issued March 16, 1971, Patent 3,797,613 issued March 19, 1974, and Patent 3,822, 003 issued July 2, 1974 and FR—A—2,454,559.

The automatic adjusting mechanism for a wedge actuated brake assembly in accordance with the prior art portion of the claim is known from FR—A—2,454,559, in which assembly a first pair of axially spaced cylindrical surfaces extends circumferentially around a sleeve slidably and rotatably received within the player of the adjusting mechanism and a second pair of axially spaced cylindrical surfaces extends internally of the plunger. The bearing function is obtained through the provision of a cylindrical roller in cooperation with the sleeve. With a bearing arrangement of this kind the sleeve is cool piloted internally of the plunger to prevent axial misalignment of the adjusting bolt and the sleeve relative to the plunger.

The invention as claimed is intended to remedy these drawbacks and solves the problem to prevent substantial misalignment of the component parts of the adjusting player assembly.

### Summary of the Invention

The present invention provides an improved self-adjusting mechanism for a wedge type brake actuator which includes an extendible plunger assembly having an adjusting bolt threaded internally of a sleeve having one end slidably and rotatably received within a plunger mounted for rectilinear movement in a cylindrical bore provided to the brake actuator housing and means are provided to pilot the adjusting sleeve internally of the plunger to prevent substantial axial misalignment of the adjusting bolt and sleeve relative to the plunger.

In the preferred embodiment, a first pair of axially spaced, cylindrical bearing surfaces are provided to the sleeve and are radially and slidably received by a second pair of axially spaced, cylindrical bearing surfaces provided internally of the plunger.

The advantages offered by the present invention will become apparent from the following description of the embodiment shown in the accompanying drawings.

### Description of the Drawings

In the drawings, wherien like reference numerals refer to like parts:

Figure 1 is a fragmentary side elevation showing the upper part of a brake assembly incorporating the present invention;

Figure 2 is a section taken along line 2—2 of Figure 1; and

Figure 3 is an enlarged view, partly in section, of the axially extendible plunger assembly of Figure 2.

### Description of the Preferred Embodiment

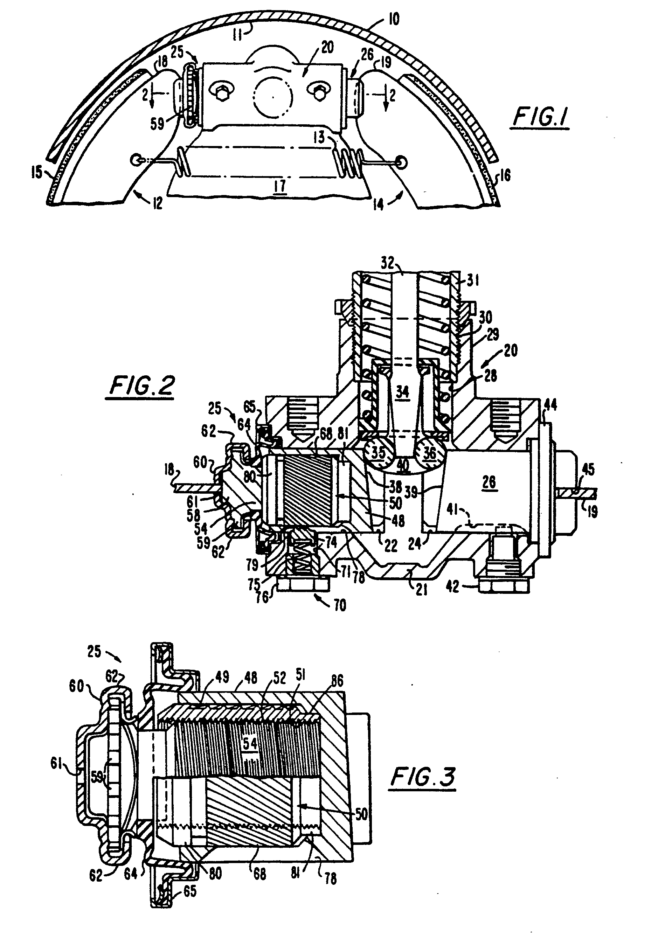

With reference to the drawings, Figure 1 shows a brake assembly comprising a brake drum 10, a pair of brake shoes 12 and 14 and a wedge type brake actuator 20. The brake drum is mounted by conventional means on a ground engaging vehicle wheel (not shown). The actuator 20 is secured by bolts to a support usually referred to as a spider 17 fixed to the vehicle axle beam or housing (not shown). Brake shoes 12 and 14 are supported for movement relative to the spider 17. As shown by Figure 1, the adjacent ends of the webs 18 and 19 of brake shoes 12 and 14 are urged into engagement with the opposite ends of the actuator 20 by means of a return spring 13. In the preferred embodiment, the opposite ends of the brake shoe webs 18 and 19 are similarly urged into engagement with the opposite ends of an actuator by means of still another return spring as disclosed in United States Patent 3,037,584. The brake shoes 12 and 15 are respectively provided with friction linings 15 and 16 adapted to engage the internal friction surface 11 of brake drum 10 upon outward movement of the brake shoes.

Figure 2 illustrates details of the wedge type actuator 20 which is comprised of a housing 21 formed with opposed similar coaxial cylindrical end bores 22 and 24 which respectively slidably mount a plunger assembly 25 and a plunger 26 for rectilinear movement therein. One side of housing 21 is provided with an opening 28 coaxial with a hollow boss 29 internally threaded at 30 to mount a tubular support 31 of a fluid motor (not shown) having a reciprocating rod 32 carrying a wedge 34 disposed between rollers 35 and 36 located for rolling movement within the grooved inner ends 38 and 39, respectively, of the plunger assembly 25 and the plunger 26.

Rollers 35 and 36 are preferably loosely mounted on the rod 32 by a carrier 40 and, when rod 32 is moved further into the housing 21 to actuate the brake, the rollers 35 and 36 respectively displace the plunger assembly 25 and the pulunger 26 outwardly relative to the housing bores 22 and 24 against the force of the return spring 13 to move the linings of the brake shoes 12 and 14 into frictional contact with the internal surface 11 of the brake drum. When the brake is disengaged, the return spring 13, acting through brake shoe webs 18 and 19, moves the plunger assembly 25 and the plunger 26 into the housing bores 22 and 24 as the wedge 34 is retracted with the operative elements of the actuator 20 returning to their respective positions as shown in Figure 2. When the brake is disengaged, the plunger assembly 25 and plunger 26 are each seated against a shoulder provided at the inner end of the housing bores 22 and 24.

Plunger 26 has a side slot 41 coacting with the inner end of a cap screw 42 which prevents rotation of the plunger 26 in bore 24. A flexible seal unit 44 is pressed fit to a counter bore at the outer end of bore 24 to prevent the entry of dirt and moisture between the plunger 26 and bore 24. The outer end of plunger 26 is recessed or grooved at 45 to slidably receive the end of the brake shoe web 19.

Plunger assembly 25 is comprised of several elements which are movable relative to each other for the purpose of adjusting or extending the length of the plunger assembly to thereby maintain the desired running clearance between the brake shoe friction linings and the brake drum and optimum operation of the brake by assuring relatively constant travel of the wedge 34, and the plunger assembly and the plunger 26 within the actuator housing 21.

Plunger assembly 25 is thus comprised of an outer member or plunger 48 slidable in housing bore 22 and having an internal cylindrical bore 49 slidably and rotatably mounting an inner sleeve 50 sometimes referred to as an adjusting nut. The inner sleeve 50 is formed with an internally threaded bore 51 which receives the threaded shank 52 of an adjusting bolt 54.

The outer end of the adjusting bolt 54 comprises an enlarged flange 58 having a toothed periphery 59 to provide a star wheel. A brake shoe retainer 60 having a slot 61, is mounted to the adjusting bolt flange 58 and resiliently held in place by a U-shaped arms 62. The arcuate end of the brake shoe web 18 extends through the slot 61 of retainer 60 and bears against the axially outer end face of the adjusting bolt 54. The slot 61 in the retainer 60 prevents lateral misalignment of the end of brake shoe web 18 and the adjusting bolt 54 while the resilient U-shaped arms 62 each having a detent between adjacent teeth in the toothed periphery 59 of the adjusting bolt flange 58 permit the flange 58 and adjusting bolt 54 to be rotated relative to the retainer 60 and the brake shoe web 18 thereby allowing for manual adjustment by rotating the flange 58 to rotate the adjusting bolt 54 internally of the sleeve 50 until the desired running clearance is obtained.

A bellows type expanding flexible seal 64 having its outer end enclosed with a metal case 65 seated in a counter bore provided around the housing bore 22 and its inner periphery snug against the adjusting bolt between the flange 58 and the threaded portion of the shank 52 prevents dirt, moisture and other materials from entering the housing bore 22.

The outer periphery of sleeve 50 is formed with a plurality of helical teeth 68. A pawl assembly 70 is provided internally of a bore 71 through actuator housing 21. The bore 71 is substantially normal to the axis of the cylindrical bore 22 and the inner end of bore 71 intersects cylindrical bore 22. The pawl assembly is comprised of a pawl 74, a compression spring 75 and a hollow cap screw 76 threaded to the outer end of the bore 71. The pawl 74 extends through a side slot 78 provided to plunger 48. The inner end of the pawl 74 is provided with a plurality of buttress teeth 79 which are biased into engagement with the helical teeth 68 provided to the external surface of sleeve 50. The pawl 74 interacts with the side slot 78 of plunger 48 to prevent rotation of the plunger 48 in housing bore 22.

The external surface of the sleeve 50 is also provided with a pair of axially spaced, cylindrical bearing surfaces 80 and 81 with each bearing surface being located adjacent one of the axially spaced ends of the helical teeth 68. The interior of the plunger 48 is provided with a second pair of axially spaced cylindrical bearing surfaces adapted to slidably receive and radially support the bearing surfaces 80 and 81. The outer end of the bore 49 of plunger 48 is machined to slidably receive and provide a radial bearing surface for the bearing surface 80 of sleeve 50. The axially inner end of the bore 49 of plunger 48 is machined to provide a cylindrical bearing surface 86 of smaller diameter which slidably receives and radially supports the bearing surface 81 provided to the sleeve 50. The cylindrical bearing surfaces 80, 81 are thus respectively radially and slidably received by the axially outer end of the bore 49 of plunger 48 and the cylindrical bearing surface 86 of plunger 48. In the preferred embodiment, the sleeve bearing surfaces 80 and 81 are about 43 mm in axial length and are machined to a diameter of about 30.4 mm and 28.2 mm, respectively. The plunger bearing surface 86 is about 3.6mm in axial length and the surfaces 49 and 86 are respectively machined to provide a radial clearance of about .1 to .15mm, thereby permitting a thin film of lubricant between the bearing surfaces.

During normal operation of the brake, the plunger assembly 25 including the sleeve 50 is displaced axially outwardly in housing bore 22 by the wedge 34 and roller 35. The pawl 74 in bore 71 is in a fixed axial location relative to housing bore 22. If the axially outward movement of the sleeve 50 is greater than the corresponding axial length of the helical teeth 68, the pawl 74 will compress spring 75 and the buttress teeth 79 on the pawl 74 will skip to an adjacent set of helical teeth 68. Then, when the brake is released, the buttress teeth 79 will rotate the helical teeth 68 and sleeve 50 to extend the adjusting bolt 54 which is threaded internally of the sleeve 50 and thereby extend the effective length of the plunger assembly 25 to maintain the desired clearance between the friction linings on the brake shoes and the friction surface of the brake drum. During return movement of the plunger assembly 25, the sleeve 50 is free to rotate on the rotary bearing surfaces 80 and 81 internally of the plunger 48 while the retainer 60 prevents rotation of the adjusting bolt 54. Detents in the resilient legs 62 of the retainer 60 are seated between adjacent teeth in the adjusting bolt flange 58 and the end of the brake shoe web 18 extends through the retainer slot 61 to prevent rotation of the retainer 60.

The axially spaced, cylindrical bearing surfaces 80 and 81 provide radial support to the sleeve 50 internally of the plunger at all times during actuation of the brake and prevent substantial axial misalignment of the adjusting bolt and sleeve relative to the plunger. This insures against misalignment of the sleeve internally of the plunger which could damage the helical teeth 68 provided to the exterior the sleeve 50 or prevent automatic adjustment of the plunger assembly 25 under extreme service conditions.

The invention may also be embodied in other specific forms without departing from the spirit or essential characteristics thereof. The foregoing description is therefore to be considered as illustrative and not restrictive, the scope of the invention being defined by the appended claims and all changes which come within the meaning and range of equivalency of the claims are therefore to be intended to be embraced thereby.

**Claim**

Means piloting the sleeve (50) of an automatic adjusting mechanism in a wedge actuated drum brake assembly of the type having a housing (21) with a cylindrical bore (22, 24) therein which mechanism includes an axially extendible plunger assembly (25) having an adjusting bolt (54) threaded internally of said sleeve (50) having one end slidably and rotatably received within said plunger (48) mounted for rectilinear movement in said cylindrical bore (22) to accommodate wear of the frictionlining of the brake shoes, a first pair of axially spaced cylindrical surfaces (80, 81) extending circumferentially around said sleeve (50) and a second pair of axially spaced cylindrical surfaces (86) extending internally of said plunger (48), said sleeve (50) having a plurality of helical teeth on its external surface, a toothed pawl carried by said housing in fixed axial location relative to said cylindrical bore and spring means urging said toothed pawl radially into engagement with said helical teeth, characterized in that said second pair of axially spaced cylindrical surfaces (86) are adapted to slidably receive said first pair of cylindrical surfaces (80, 81) in bearing relationship to pilot said sleeve (50) and maintain substantial axial alignment of said adjusting bolt (54) and said sleeve (50) internally of said plunger (48).

**Patentanspruch**

Vorrichtung zum Steuern der Hülse (50) eines automatischen Einstellmechanismus in einer keilbetätigten Trommelbremsanordnung des Typs mit einem Gehäuse (21), in dem eine zylindrische Bohrung (22, 24) angebracht ist, wobei der Einstellmechanismus· eine axial verlängerbare Kolbenanordnung (25) aufweist, die mit einem Einstellbolzen (54) versehen ist, der in die Hülse (50) geschraubt ist, die mit einem Ende verschiebbar und drehbar in dem Kolben (48) zur Anpassung an eine Abnutzung des Reibbelags der Bremsschuhe geradlinig beweglich in der zylindrischen Bohrung (22) angebracht ist, mit einem ersten Paar axial im Abstand voneinander liegender zylindrischer Flächen (80, 81), die sich in Umfangsrichtung um die Hülse (50) erstrecken, sowie einem zweiten Paar axial im Abstand voneinander liegender zylindrischer Flächen (86), die sich im Inneren des Kolbens (48) erstrecken, wobei die Hülse (50) mehrere schraubenlinienförmige Zähne an ihrer Innenfläche aufweist und von dem Gehäuse in fester axialer Lage in bezug zu der zylindrischen Bohrung eine gezahnte Klinke getragen wird, die von Federmitteln radial in Eingriff mit den schraubenlinienförmigen Zähnen gedrückt wird, dadurch gekennzeichnet, daß das zweite Paar der axial im Abstand voneinander liegenden zylindrischen Flächen (86) geeignet ist, das erste Paar der zylindrischen Flächen (80, 81) verschiebbar zum Steuern der Hülse (50) in einer Lagerbeziehung aufzunehmen und eine axiale Ausrichtung des Einstellbolzens (54) und der Hülse (50) im Inneren des Kolbens (49) aufrechtzuerhalten.

## Revendication

Moyens pour guider la douille (50) d'un dispositif automatique de réglage dans un système de frein à tambour actionné par coin du type ayant un boîtier (21) dans lequel est ménagé un alésage cylindrique (22, 24), ce dispositif comprenant un ensemble plongeur axialement extensible (25) ayant une vis de réglage (54) filetée à l'intérieur de la douille (50) ayant une extrémité montée libre en rotation et en coulissement dans le plongeur (48) monté pour se déplacer de manière rectiligne dans l'alésage cylindrique (22) de façon a compenser l'usure des garnitures des mâchoires de frein, deux premières surfaces cylindriques axialement espacées (80, 81) s'étendant circonférentiellement autour de la douille (50) et deux secondes surfaces cylindriques axialement espacées (86) s'étendant à l'intérieur du plongeur (48), la douille (50) portant plusieurs dents hélicoïdales sur sa surface extérieure, un cliquet denté porté par le boîtier en position axiale fixe relativement à l'alésage cylindrique et des moyens élastiques sollicitant le cliquet denté radialement en prise avec les dents hélicoïdales, caractérisé en ce que les deux secondes surfaces cylindriques axialement espacées (86) sont adaptées à recevoir avec possibilité de glissement et interaction de type palier les deux premières surfaces cylindriques (80, 81), de manière à guider la douille (50) et maintenir un alignement axial correct de la vis de réglage (54) et de la douille (50) à l'intérieur du plongeur (48).

FIG.1

FIG.2

FIG.3